# EUROPÄISCHE PATENTSCHRIFT

(11) **EP 3 034 331 B1**
(45) Veröffentlichungstag und Bekanntmachung des Hinweises auf die Patenterteilung: **19.06.2019**
(21) Anmeldenummer: 15186360.2
(22) Anmeldetag: 23.09.2015
(51) Int. Cl.: B60C 11/12, B60C 11/03

(54) **FAHRZEUGLUFTREIFEN**
PNEUMATIC TYRES FOR A VEHICLE
PNEUMATIQUES DE VÉHICULE

(30) Priorität: 18.12.2014 DE 102014226449
(43) Veröffentlichungstag der Anmeldung: 22.06.2016
(73) Patentinhaber: Continental Reifen Deutschland GmbH, 30165 Hannover (DE)
(72) Erfinder: Heinhaupt, Torsten, 29313 Hambühren (DE)
(74) Vertreter: Finger, Karsten

(56) Entgegenhaltungen:
- EP-A1- 0 779 164
- EP-A2- 2 199 111
- DE-A1- 4 019 386
- DE-A1-102005 055 144
- JP-A- H11 310 013

## Beschreibung

### Fahrzeugluftreifen

Die Erfindung betrifft einen Fahrzeugluftreifen, insbesondere für den Einsatz unter winterlichen Fahrbedingungen, mit einem Laufstreifen, welcher zumindest eine Profilblockreihe aufweist, deren Profilblöcke in Umfangsrichtung durch Querrillen voneinander getrennt sind, wobei Profilblöcke mit zumindest drei Einschnitten, zwei äußeren Einschnitten und zumindest einem inneren Einschnitt, vorgesehen sind, die sich zumindest im Wesentlichen parallel zueinander und zu den von den Querrillen begrenzten Profilblockkanten erstrecken und in Draufsicht wellen- bzw. sinusförmig verlaufen, wobei die Wellenform des zumindest einen inneren Einschnittes eine geringere Amplitude aufweist als die Wellenform der beiden äußeren Einschnitte.

Fahrzeugluftreifen mit Laufstreifen, die Profilblöcke mit in Wellen- bzw. Sinusform verlaufenden Einschnitten aufweisen, sind in unterschiedlichen Ausführungsvarianten bekannt. Wellenförmige Einschnitte sind vor allem dazu gut geeignet, die Griffeigenschaften des Laufstreifens auf *winterlichen* Fahrbahnen, wie auf Schnee, Schneematsch oder Eis, zu verbessern und haben durch ihre Form auch eine stabilisierende Wirkung auf die Profilblöcke.

Ein Fahrzeugluftreifen der eingangs genannten Art ist beispielsweise aus der DE 40 19 386 A1 bekannt. Die Profilblöcke des Laufstreifens weisen in Draufsicht mehrere wellenförmige Einschnitte auf, wobei die Wellenform von zumindest einem der inneren Einschnitte eine geringere Amplitude aufweist als die Wellenform der äußeren Einschnitte. Die Wellenlänge der inneren Einschnitte ist größer als jene der äußeren Einschnitte.

Aus der DE 10 2005 055 144 A1 ist ein weiterer Fahrzeugluftreifen mit einem Laufstreifen mit Profilblöcken bekannt, welche mit in Draufsicht wellenförmigen Einschnitten versehen sind, deren Amplituden sich voneinander unterschieden.

Ein weiterer Fahrzeugluftreifen mit wellenförmig verlaufenden Einschnitten in Profilblöcken ist beispielsweise aus der EP 1 529 662 A1 bekannt. Diese Einschnitte sind derart ausgeführt, dass die Amplitude ihrer Wellenform in eine der Erstreckungsrichtungen der Einschnitte zunimmt. Dadurch soll auf die Stabilität bzw. Steifigkeit des Profilblockes beim Auftreten von Umfangs- und Querkräften gezielt Einfluss genommen werden können. Dabei soll eine größere Amplitude eine stärker ausgeprägte Abstützung der Profilblockelemente, die von den Einschnitten im Profilblock gebildet werden, bewirken und es sollen dadurch die Handlingeigenschaften des Reifens verbessert werden.

Es ist bekannt, dass bei wellen- oder sinusförmig verlaufenden Einschnitten im Bereich der Spitzen der Wellenberge beim Belasten der Profilblöcke beim Abrollen des Reifens Druckspitzen entstehen. Diese Druckspitzen haben den nachteiligen Effekt, dass weniger Kraft vom Laufstreifen auf den Untergrund übertragen werden kann und erhöhen zudem lokal die Temperatur am Untergrund, sodass auf eisigen Oberflächen Eis lokal aufgeschmolzen wird. Der dadurch gebildete Wasserfilm vermindert die Reibung zwischen den Profilblöcken und dem Untergrund, sodass die Kraftübertragung vom Laufstreifen auf die Straße bzw. den Untergrund beeinträchtigt wird. Bei gerade verlaufenden Einschnitten treten diese Effekte kaum bzw. nicht auf, diese sind jedoch in Folge des fehlenden Formschlusses zwischen den Profilblockelementen der Profilblöcke ungünstig, da sie die Profilblocksteifigkeit verringern, was wiederum schlechtere Handlingeigenschaften zur Folge hat.

Der Erfindung liegt die Aufgabe zu Grunde, einen Fahrzeugluftreifen der eingangs genannten Art mit wellen- bzw. sinusförmigen Einschnitten in Profilblöcken des Laufstreifens derart auszuführen, dass die erwähnten Druckspitzen reduziert werden, der Selbstverzahnungseffekt der Einschnitte jedoch erhalten bleibt, wobei vor allem die Reibung des Laufstreifens auf eisigem Untergrund erhöht werden soll, um auch die Brems- und Traktionseigenschaften des Fahrzeugluftreifens auf Eis zu verbessern.

Gelöst wird die gestellte Aufgabe erfindungsgemäß dadurch, dass die Wellenform des zumindest einen inneren Einschnittes eine kleinere Wellenlänge aufweist als die Wellenform der äußeren Einschnitte.

Die äußeren Einschnitte können somit nach wie vor für einen guten Formschluss der einzelnen Profilblockelemente sorgen, wobei durch die geringere Amplitude des inneren Einschnittes lokal Druckspitzen reduziert werden können und sich dadurch der Druck gleichmäßiger über die Profilblockelemente, die diesem Einschnitt benachbart verlaufen, verteilen kann. Durch die gleichmäßigere Druckverteilung wird auf die Kontaktfläche zum Untergrund lokal weniger Druck aufgebracht. Der geringere Druck vermindert das Aufschmelzen von Eis bei eisiger Oberfläche und führt dazu, dass durch weniger Schmelzwasser die Reibung zwischen den Profilblöcken und der Fahrbahnoberfläche verbessert wird. Damit einher geht auch eine Verbesserung der Brems- und Traktionseigenschaften. Die Handlingeigenschaften bleiben gleich gut erhalten, da die äußeren Einschnitte nach wie vor einen sehr guten Formschluss der einzelnen Profilblockelemente sicherstellen. Dass die Wellenform des zumindest einen inneren Einschnittes eine kleinere Wellenlänge aufweist als die Wellenform der äußeren Einschnitte trägt zu einer Reduzierung der Druckspitzen und einer gleichmäßigeren Druckverteilung über die Profilblockelemente bei.

Weitere erfindungsgemäße Maßnahmen und Merkmale beeinflussen auf vorteilhafte Weise den Formschluss zwischen den einzelnen Profilblockelementen, nehmen somit Einfluss auf die Profilblocksteifigkeit und sind für eine besonders vorteilhafte Druckverteilung über die Erstreckung der Profilblockelemente von Vorteil.

Zu diesen bevorzugten und besonders vorteilhaften Merkmalen gehört, dass die Amplitude der Wellenform des zumindest einen inneren Einschnittes 0,5 mm bis 0,75 mm, ferner, dass die Wellenlänge der Wellenform der äußeren Einschnitte 4 mm bis 6 mm beträgt.

Diesbezüglich besonders günstig ist es auch, wenn die Wellenlänge der Wellenform des zumindest einen inneren Einschnittes um bis zu 35 % kleiner ist als die Wellenlänge der Wellenform der äußeren Einschnitte.

Weitere erfindungsgemäße Maßnahmen gestatten es, die Umfangs- und die Quersteifigkeit der Profilblöcke gezielt zu beeinflussen. Eine besonders gleichmäßige Profilblocksteifigkeit wird erfindungsgemäß mit Einschnitten erreicht, bei denen die beiden äußeren Einschnitte übereinstimmend ausgeführte Wellenformen aufweisen, insbesondere, wenn die Wellenformen der beiden äußeren Einschnitte jeweils eine über ihre Erstreckung konstante Amplitude und bevorzugt auch jeweils eine über ihre Erstreckung konstante Wellenlänge aufweisen. Gleichermaßen günstig wirkt es sich auf die Profilblocksteifigkeit aus, wenn die Wellenform des zumindest einen inneren Einschnittes eine über ihre Erstreckung konstante Amplitude und vorzugsweise auch eine über ihre Erstreckung konstante Wellenlänge aufweist. Bei weiteren Ausführungsformen der Erfindung können die Amplitude und die Wellenlänge sowohl der äußeren Einschnitte als auch des inneren Einschnittes über die Erstreckung der Wellenformen dieser Einschnitte innerhalb der oben erwähnten Abmessungen für die Amplituden und die Wellenlängen variiert werden.

Besonders bevorzugt ist eine Ausführung, bei der die erfindungsgemäß ausgeführten Einschnitte in schulterseitig angeordneten Profilblöcken vorgesehen werden.

Weitere Merkmale bzw. Maßnahmen gestatten es, gezielt auf die Stabilität bzw. Steifigkeit des Profilblockes beim Auftreten von Umfangs- und Querkräften Einfluss zu nehmen, wobei der mit der Erfindung erzielte Effekt - gleichmäßigere Druckverteilung und damit geringeres Aufschmelzen von Eis auf eisigem Untergrund - erhalten bleibt. Zu diesen Maßnahmen gehört beispielsweise, dass die beiden äußeren Einschnitte übereinstimmend ausgeführte Wellenformen und vorzugsweise jeweils eine über ihre Erstreckung konstante Amplitude und eine vorzugsweise auch über ihre Erstreckung konstante Wellenlänge aufweisen. Auch der zumindest eine innere Einschnitt kann über seine Erstreckung eine konstante Amplitude und eine konstante Wellenlänge aufweisen. Bei weiteren mögliche Ausführungsformen der Erfindung können sowohl die Amplitude als auch die Wellenlänge der Wellenform der äußeren Einschnitte und/oder des zumindest einen inneren Einschnittes über die Erstreckung der Einschnitte, insbesondere im Rahmen der oben erwähnten Dimensionen, variiert werden.

Profilblöcke mit erfindungsgemäß ausgeführten Einschnitten sind bevorzugt schulterseitig angeordnete Profilblöcke.

Weitere Merkmale, Vorteile und Einzelheiten der Erfindung werden nun anhand der Zeichnung, die ein Ausführungsbeispiel darstellt, näher beschrieben. Dabei zeigen
Fig. 1 eine Draufsicht auf eine Teilabwicklung eines Laufstreifens eines Fahrzeugluftreifens und
Fig. 2 einen Profilblock aus Fig. 1 in vergrößerter Darstellung.

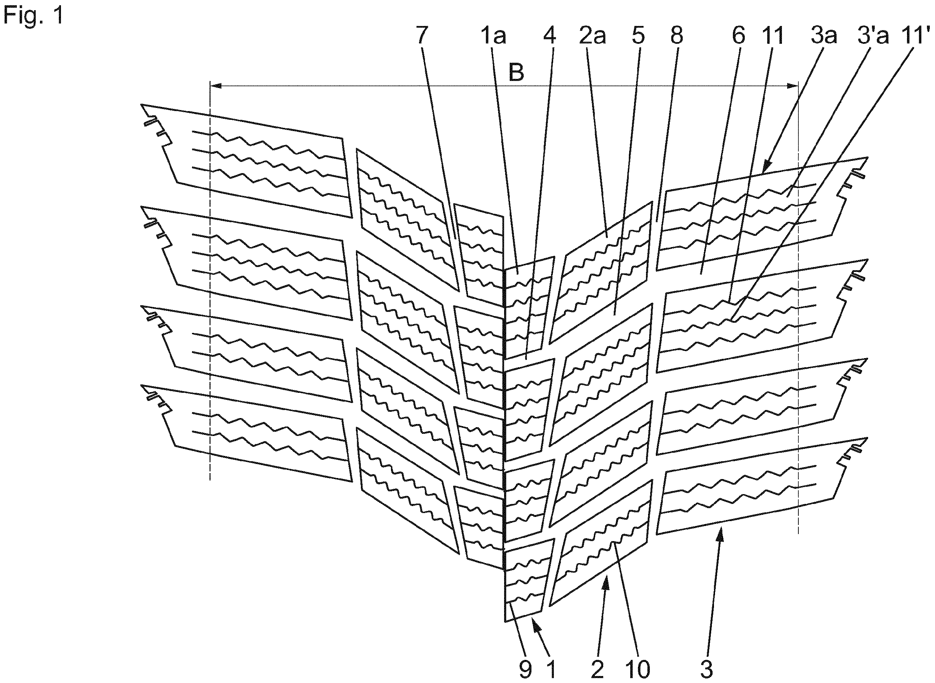

Der in Fig. 1 gezeigte Laufstreifen ist für Winterreifen oder Ganzjahresreifen von Personenkraftwagen, Vans oder dergleichen vorgesehen. Der dargestellte Laufstreifen ist zwar laufrichtungsgebunden ausgeführt, die Erfindung ist jedoch nicht auf laufrichtungsgebundene Laufstreifen beschränkt. Mit B ist jene Breite des Laufstreifens bezeichnet, über welche der Reifen beim Abrollen mit dem Untergrund in Kontakt tritt. B entspricht daher der Breite des bodenberührenden Teils des Laufstreifens und gemäß E.T.R.T.O.-Standards der Breite des statisch ermittelten Footprints (Last bei 70 % der Tragfähigkeit bei einem Innendruck von 2,5 bar, Innendruck 85 % von 2,5 bar).

Beim dargestellten Ausführungsbeispiel weist der Laufstreifen in jeder Laufstreifenhälfte drei Blockreihen 1, 2, 3 auf, welche durch Querrillen 4, 5 und 6 sowie durch Umfangsrillen 7 und 8 in Profilblöcke 1a, 2a und 3a gegliedert sind. In jedem Profilblock 1a, 2a und 3a ist jeweils eine Anzahl von Einschnitten 9, 10 und 11 bzw. 11' ausgebildet, die sich bei der gezeigten Ausführungsform zumindest im Wesentlichen parallel zu den die Querrillen 4, 5, 6 begrenzenden Profilblockkanten erstrecken. Die Einschnitte 9, 10, 11 bzw. 11' weisen insbesondere eine Breite von 0,4 mm bis 0,6 mm auf, ihre Tiefe entspricht höchstens der maximalen Profiltiefe, welche bei Reifen für Personenkraftwagen zwischen 6 mm und 8,5 mm gewählt wird. Dabei können die Einschnitte 9, 10, 11 bzw 11' Abschnitte unterschiedlicher Tiefen aufweisen. Bei der gezeigten Ausführungsform verlaufen ferner sämtliche Einschnitte 9, 10, 11bzw. 11' in Draufsicht sinus- bzw. wellenförmig.

Die Profilstrukturen, also die Profilblöcke 1a, 2a, 3a, sowie die Querrillen 4, 5, 6 und die Umfangsrillen 7, 8 sind, wie es üblich ist, nach einem Verfahren der Pitchlängenvariation geräuschoptimiert, sodass sie unterschiedliche Umfangserstreckungen bzw. Umfangslängen aufweisen. Das Pitchlängenvariationsverfahren ist nicht Gegenstand der Erfindung, sodass auf dieses nicht näher eingegangen wird.

In den Blöcken 3a der schulterseitigen Blockreihen 3 sind, je nach der jeweiligen Umfangslänge der Profilblöcke 3a in Folge der Pitchlängenvariation, entweder zwei (in Blöcken 3a mit kleinerer Umfangslänge) oder drei (in Blöcken 3a mit größerer Umfangslänge) wellen- bzw. sinusförmige Einschnitte 11 bzw. 11' - zwei äußere Einschnitte 11 und ein innerer (mittlerer) Einschnitt 11' - vorgesehen. Die Einschnitte 11, 11' erstrecken sich innerhalb der schulterseitigen Profilblöcke 3a derart, dass sie zueinander und zu den von den Querrillen 6 begrenzten Profilblockkanten zumindest im Wesentlichen gleich große Abstände aufweisen und Profilblockelemente 3'a begrenzen.

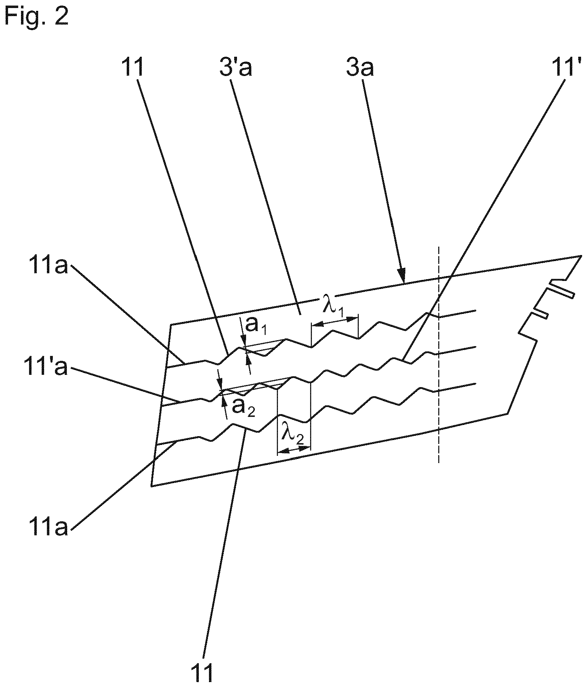

Wie insbesondere Fig. 2 anhand der Draufsicht auf einen Profilblock 3a mit drei Einschnitten 11, 11' zeigt, durchqueren die Einschnitte 11, 11' den Profilblock 3a mit der erwähnten Wellen- bzw. Sinusform bis auf kurze Endabschnitte 11a, 11'a an der Umfangsrille 8, welche im Wesentlichen parallel zu den die Querrillen 6 begrenzenden Profilblockkanten verlaufen. Über den Großteil ihrer Erstreckung weisen daher die Einschnitte 11, 11' den erwähnten wellen- bzw. sinusförmigen Verlauf auf. Die Wellenlänge λ₁ und die Amplitude a₁ der Wellenform der Einschnitte 11 stimmen überein und sind über die Erstreckung der Einschnitte 11 konstant. Die Wellenlänge λ₁ der Einschnitte 11 beträgt 4 mm bis 6 mm, insbesondere 5 mm, die Amplitude a₁ beträgt 0,8 mm bis 1,1 mm, insbesondere etwa 0,9 mm. Der innere Einschnitt 11' weist eine Wellenform auf, deren Amplitude a₂ kleiner ist als die Amplitude a₁ der Wellenform der Einschnitte 11, wobei a₂ 0,5 mm bis 0,75 mm, insbesondere etwa 0,65 mm, beträgt. Die Wellenlänge λ₂ der Einschnitte 11' kann mit jener der Einschnitte 11 übereinstimmen, ist jedoch vorzugsweise, wie dargestellt, kleiner als die Wellenlänge λ₁ der Einschnitte 11. Die Wellenlänge λ₂ entspricht daher höchstens der Wellenlänge λ₁ und ist vorzugsweise um mindestens 15 % und um bis zu 35 % kleiner als die Wellenlänge λ₁ der Einschnitte 11.

Die äußeren Einschnitte 11 sorgen in Folge ihrer größeren Amplitude a₁ für einen guten Formschluss zwischen den Profilblockelementen 3'a. Die an den Spitzen der "Wellenberge" beim Belasten des Profilblocks 3a während des Abrollens des Reifens entstehenden Druckspitzen, die durch ein Verbiegen der Profilblockelemente 3'a entstehen, sind beim Einschnitt 11' durch dessen geringere Amplitude a₂ reduziert, da sich der Druck in diesen Blockbereichen gleichmäßiger auf die Profilblockelemente 3'a verteilen kann. Durch diese gleichmäßigere Verteilung wird auf die Kontaktfläche, den Untergrund, lokal weniger Druck aufgebracht. Dies führt zu einer geringeren Temperaturerhöhung in der Kontaktfläche, sodass auf eisigem Untergrund weniger Eis aufgeschmolzen wird und die Reibung zwischen den Blockoberflächen und der Fahrbahnoberfläche bzw. dem Eis vergrößert wird.

Bei einer weiteren, nicht dargestellten Ausführungsform der Erfindung kann die Amplitude a₁, a₂ und/oder die Wellenlänge λ₁, λ₂ der äußeren Einschnitte 11 und des inneren Einschnittes 11' über die Erstreckung des jeweiligen Einschnittes 11, 11' im Ausmaß der oben erwähnten Dimensionen variieren. Die Erfindung ist auch auf Profilblöcke anwendbar, in welchen vier Einschnitte in Wellen- bzw. Sinusform verlaufen. In diesem Fall werden die beiden inneren Einschnitte gemäß der Erfindung mit geringerer Amplitude und vorzugsweise auch geringerer Wellenlänge als die äußeren Einschnitte ausgeführt. Es ist besonders vorteilhaft, erfindungsgemäße Einschnitte in schulterseitigen Profilblöcken vorzusehen. Solche Einschnitte können jedoch auch in Profilblöcken vorgesehen sein, die im mittleren Laufstreifenbereich angeordnet sind.

### Bezugsziffernliste

- 1, 2, 3: Blockreihe
- 1a, 2a, 3a: Profilblock
- 3'a: Profilblockelement
- 4, 5, 6: Querrille
- 7, 8: Umfangsrille
- 9, 10, 11, 11': Einschnitt
- 11a, 11'a: Endabschnitt
- a₁, a₂: Amplitude
- B: Breite
- λ₁, λ₂: Wellenlänge

## Patentansprüche

1. Fahrzeugluftreifen, insbesondere für den Einsatz unter winterlichen Fahrbedingungen, mit einem Laufstreifen, welcher zumindest eine Profilblockreihe (1, 2, 3) aufweist, deren Profilblöcke (1a, 2a, 3a) in Umfangsrichtung durch Querrillen (4, 5, 6) voneinander getrennt sind, wobei Profilblöcke (1a, 2a, 3a) mit zumindest drei Einschnitten (11, 11'), zwei äußeren Einschnitten (11) und zumindest einem inneren Einschnitt (11'), vorgesehen sind, die sich zumindest im Wesentlichen parallel zueinander und zu den von den Querrillen (4, 5, 6) begrenzten Profilblockkanten erstrecken und in Draufsicht wellen- bzw. sinusförmig verlaufen, wobei die Wellenform des zumindest einen inneren Einschnittes (11') eine geringere Amplitude (a₂) aufweist als die Wellenform der beiden äußeren Einschnitte (11), **dadurch gekennzeichnet,**
**dass** die Wellenform des zumindest einen inneren Einschnittes (11') eine kleinere Wellenlänge (λ₂) aufweist als die Wellenform der äußeren Einschnitte (11).

2. Fahrzeugluftreifen nach Anspruch 1, **dadurch gekennzeichnet, dass** die Amplitude (a₁) der Wellenform der äußeren Einschnitte (11) 0,8 mm bis 1,1 mm beträgt.

3. Fahrzeugluftreifen nach Anspruch 1 oder 2, **dadurch gekennzeichnet, dass** die Amplitude (a₂) der Wellenform des zumindest einen inneren Einschnittes (11') 0,5 mm bis 0,75 mm beträgt.

4. Fahrzeugluftreifen nach einem der Ansprüche 1 bis 3, **dadurch gekennzeichnet, dass** die Wellenlänge (λ₁) der Wellenform der äußeren Einschnitte (11) 4 mm bis 6 mm beträgt.

5. Fahrzeugluftreifen nach einem der Ansprüche 1 bis 4, **dadurch gekennzeichnet, dass** die Wellenlänge (λ₂) der Wellenform des zumindest einen inneren Einschnittes (11') um bis zu 35 % kleiner ist als die Wellenlänge (λ₁) der Wellenform der äußeren Einschnitte (11).

6. Fahrzeugluftreifen nach einem der Ansprüche 1 bis 5, **dadurch gekennzeichnet, dass** die beiden äußeren Einschnitte (11) übereinstimmend ausgeführte Wellenformen aufweisen.

7. Fahrzeugluftreifen nach einem der Ansprüche 1 bis 6, **dadurch gekennzeichnet, dass** die Wellenformen der beiden äußeren Einschnitte (11) jeweils eine über ihre Erstreckung konstante Amplitude (a₁) aufweisen.

8. Fahrzeugluftreifen nach einem der Ansprüche 1 bis 7, **dadurch gekennzeichnet, dass** die Wellenformen der beiden äußeren Einschnitte (11) jeweils eine über ihre Erstreckung konstante Wellenlänge (λ₁) aufweisen.

9. Fahrzeugluftreifen nach einem der Ansprüche 1 bis 8, **dadurch gekennzeichnet, dass** die Wellenform des zumindest einen inneren Einschnittes (11') eine über ihre Erstreckung konstante Amplitude (a₂) aufweist.

10. Fahrzeugluftreifen nach einem der Ansprüche 1 bis 9, **dadurch gekennzeichnet, dass** die Wellenform des zumindest einen inneren Einschnittes (11') eine über ihre Erstreckung konstante Wellenlänge (λ₂) aufweist.

11. Fahrzeugluftreifen nach einem der Ansprüche 1 bis 10, **dadurch gekennzeichnet, dass** die Einschnitte (11, 11') in schulterseitig angeordneten Profilblöcken (3a) ausgebildet sind.

## Claims

1. Pneumatic vehicle tyre, in particular for use in winter driving conditions, with a tread rubber, which has at least one row (1, 2, 3) of tread bars, the tread bars (1a, 2a, 3a) of which are separated from one another in the circumferential direction by transverse grooves (4, 5, 6), wherein tread bars (1a, 2a, 3a) with at least three sipes (11, 11'), two outer sipes (11) and at least one inner sipe (11'), are provided, extending at least substantially parallel to one another and to the tread bar edges bounded by the transverse grooves (4, 5, 6) and in plan view running in a wavy or sinusoidal form, wherein the wave form of the at least one inner sipe (11') has a smaller amplitude (a₂) than the wave form of the two outer sipes (11),
**characterized**
**in that** the wave form of the at least one inner sipe (11') has a smaller wavelength (λ₂) than the wave form of the outer sipes (11).

2. Pneumatic vehicle tyre according to Claim 1, **characterized in that** the amplitude (a₁) of the wave form of the outer sipes (11) is 0.8 mm to 1.1 mm.

3. Pneumatic vehicle tyre according to Claim 1 or 2, **characterized in that** the amplitude (a₂) of the wave form of the at least one inner sipe (11') is 0.5 mm to 0.75 mm.

4. Pneumatic vehicle tyre according to one of Claims 1 to 3, **characterized in that** the wavelength (λ₁) of the wave form of the outer sipes (11) is 4 mm to 6 mm.

5. Pneumatic vehicle tyre according to one of Claims 1 to 4, **characterized in that** the wavelength (λ₂) of the wave form of the at least one inner sipe (11') is smaller by up to 35% than the wavelength (λ₁) of the wave form of the outer sipes (11).

6. Pneumatic vehicle tyre according to one of Claims 1 to 5, **characterized in that** the two outer sipes (11) have wave forms that are made to coincide with one another.

7. Pneumatic vehicle tyre according to one of Claims 1 to 6, **characterized in that** the wave forms of the two outer sipes (11) have in each case an amplitude (a₁) that is constant over its extent.

8. Pneumatic vehicle tyre according to one of Claims 1 to 7, **characterized in that** the wave forms of the two outer sipes (11) have in each case a wavelength (λ₁) that is constant over its extent.

9. Pneumatic vehicle tyre according to one of Claims 1 to 8, **characterized in that** the wave form of the at least one inner sipe (11') has an amplitude (a₂) that is constant over its extent.

10. Pneumatic vehicle tyre according to one of Claims 1 to 9, **characterized in that** the wave form of the at least one inner sipe (11') has a wavelength (λ₂) that is constant over its extent.

11. Pneumatic vehicle tyre according to one of Claims 1 to 10, **characterized in that** the sipes (11, 11') are formed in tread bars (3a) arranged at the shoulders.

## Revendications

1. Pneumatique de véhicule, en particulier pour l'utilisation en conditions hivernales, doté d'une bande de roulement, laquelle comporte au moins une rangée de blocs de profil (1, 2, 3), dont les blocs de profil (1a, 2a, 3a) sont séparés l'un de l'autre dans la direction du pourtour par des rainures transversales (4, 5, 6), dans lequel les blocs de profil (1a, 2a, 3a) sont prévus avec au moins trois incisions (11, 11'), deux incisions extérieures (11) et au moins une incision intérieure (11'), lesquelles sont au moins essentiellement parallèles l'une à l'autre et aux arêtes des blocs de profil délimités par les rainures transversales (4, 5, 6) et forment des ondulations ou sinusoïdes en vue de dessus, dans lequel l'ondulation de l'au moins une incision intérieure (11') possède une amplitude (a₂) plus faible que l'ondulation des deux incisions extérieures (11),
**caractérisé en ce que** l'ondulation de l'au moins une incision intérieure (11') possède une longueur d'onde (λ₂) plus petite que l'ondulation des incisions extérieures (11).

2. Pneumatique de véhicule selon la revendication 1, **caractérisé en ce que** l'amplitude (a₁) de l'ondulation des incisions extérieures (11) est de 0,8 mm à 1,1 mm.

3. Pneumatique de véhicule selon la revendication 1 ou 2, **caractérisé en ce que** l'amplitude (a₂) de l'ondulation de l'au moins une incision intérieure (11') est de 0,5 mm à 0,75 mm.

4. Pneumatique de véhicule selon l'une des revendications 1 à 3, **caractérisé en ce que** la longueur d'onde (λ₁) de l'ondulation des incisions extérieures (11) est de 4 mm à 6 mm.

5. Pneumatique de véhicule selon l'une des revendications 1 à 4, **caractérisé en ce que** la longueur d'onde (λ₂) de l'au moins une incision intérieure (11') est jusqu'à 35 % inférieure à la longueur d'onde (λ₁) de l'ondulation des incisions extérieures (11).

6. Pneumatique selon l'une des revendications 1 à 5, **caractérisé en ce que** les deux incisions extérieures (11) comportent des ondulations réalisées de manière concordante.

7. Pneumatique selon l'une des revendications 1 à 6, **caractérisé en ce que** les ondulations des deux incisions extérieures (11) possèdent respectivement une amplitude (a₁) constante sur toute leur étendue.

8. Pneumatique selon l'une des revendications 1 à 7, **caractérisé en ce que** les ondulations des deux incisions extérieures (11) possèdent respectivement une longueur d'onde (λ₁) constante sur toute leur étendue.

9. Pneumatique selon l'une des revendications 1 à 8, **caractérisé en ce que** l'ondulation de l'au moins une incision intérieure (11') possède une amplitude (a₂) constante sur toute son étendue.

10. Pneumatique selon l'une des revendications 1 à 9, **caractérisé en ce que** l'ondulation de l'au moins une incision intérieure (11') possède une longueur d'onde (λ₂) constante sur toute son étendue.

11. Pneumatique selon l'une des revendications 1 à 10, **caractérisé en ce que** les incisions (11, 11') sont conçues en blocs de profil (3a) agencés côté épaule.
